# EUROPÄISCHE PATENTSCHRIFT

(11) **EP 1 681 193 B1**
(45) Veröffentlichungstag und Bekanntmachung des Hinweises auf die Patenterteilung: **10.03.2010**
(21) Anmeldenummer: 05026828.3
(22) Anmeldetag: 08.12.2005
(51) Int. Cl.: B60H 1/34

(54) **Luftausströmer, insbesondere für ein Fahrzeug**
Air outlet nozzle, especially for a vehicle
Buse de sortie d'air, en particulier pour un véhicule

(30) Priorität: 18.01.2005 DE 202005000794 U
(43) Veröffentlichungstag der Anmeldung: 19.07.2006
(73) Patentinhaber: TRW Automotive Electronics & Components GmbH, 78315 Radolfzell (DE)
(72) Erfinder: Steinbeiss, Sabine, 95100 Selb (DE)
(74) Vertreter: Prinz & Partner

(56) Entgegenhaltungen:
- WO-A-2004/103676
- DE-A1- 10 209 074
- DE-A1- 19 807 292
- FR-A1- 2 791 114
- US-A- 4 414 170
- US-A- 5 352 399
- US-A1- 2002 072 321
- "MULTI-PART PLASTIC MOLD" POPULAR MECHANICS, Bd. 176, Nr. 4, 1. April 1999 (1999-04-01), Seite 30, XP000963980
- "TECHNIQUE PRODUCES ASSEMBLED HOLLOW PARTS OUT OF THE MOLD" MODERN PLASTICS INTERNATIONAL, Nr. 12, 1. Dezember 2002 (2002-12-01), Seite 31, XP001121771 LAUSANNE, CH

## Beschreibung

Die Erfindung betrifft einen Luftausströmer, insbesondere für ein Fahrzeug, mit einem Gehäuse, einem Lüftungsteil und einer Baugruppe, die eine Verbindung zwischen dem Gehäuse und dem Lüftungsteil herstellt und eine dreh- und schwenkbare Lagerung des Lüftungsteils im Gehäuse ermöglicht, wobei die Baugruppe eine Schiene aufweist, einen Gleiter, der auf der Schiene verschiebbar ist, und ein Schwenklager.

Luftausströmer sind in den verschiedensten Ausgestaltungen bekannt. Sie dienen allgemein dazu, das Volumen und die Richtung eines Luftstroms, der einem Fahrzeuginnenraum zur Klimatisierung zugeführt wird, in der gewünschten Weise einzustellen.

Es sind sowohl rechteckige als auch runde Luftausströmern bekannt. Bei runden Luftausströmern wird eine dreh- und schwenkbare Lagerung eines Lüftungsteils im Gehäuse beispielsweise durch ein Kardangelenk ermöglicht. Um dem ständigen Verschleiß der Berührungsflächen des beweglichen Lüftungsteils im Gehäuse entgegenzuwirken, sind Filzauflagen bekannt, die jedoch selbst einen Abrieb ausgesetzt sind und deswegen nicht dauerhaft einsetzbar sind.

Aus der FR 2 791 114 A1 ist ein Luftausströmer der eingangs genannten Art mit einer Schiene bekannt, die an einer Düse ausgebildet ist. Ferner ist ein Gleiter vorgesehen, der mit der Schiene zusammenwirkt und zwischen der Düse und einem Gehäuse angeordnet ist.

Die Aufgabe der Erfindung besteht darin, einen Luftausströmer zu schaffen, der dauerhaft funktionsfähig und kostengünstig herzustellen ist.

Zu diesem Zweck sieht die Erfindung bei einem Luftausströmer der eingangs genannten Art vor, die Schiene in zwei Richtungen gekrümmt ausgeführt ist. Die gekrümmte Form der Schiene ermöglicht, sie in einem Spalt zwischen dem kalottenförmig ausgeführten Lüftungsteil und dem Gehäuse anzuordnen, das in diesem Bereich ebenfalls kalottenförmig ausgeführt ist. So ist für die Schiene und somit für die gesamte Baugruppe nur ein geringer Platz notwendig, und der Luftausströmer kann optisch ansprechend gestaltet werden. Die dreh- und schwenkbare Lagerung des Lüftungsteils wird durch die Baugruppe aus Schiene, Gleiter und Schwenklager ermöglicht, wobei der Luftstrom, der dem Fahrzeuginnenraum zur Klimatisierung zugeführt wird, so in der gewünschten Weise verstellt werden kann. Diese Baugruppe kann einfach produziert werden, wodurch ein kostengünstiger Luftausströmer gewährleistet ist. Die Baugruppe kann beispielsweise im In-Mould-Assembly-Verfahren hergestellt werden, wodurch Montagekosten eingespart werden können, da einzelne Spritzgußteile nicht aneinander montiert werden müssen sondern ineinander aushärten. Zudem gewährleistet eine im In-Mould-Assembly-Verfahren hergestellte Baugruppe eine spielfreie Lagerung des Lüftungsteils im Gehäuse.

Vorzugsweise ist der Gleiter mit dem Lüftungsteil verbunden. Der Gleiter, der auf der Schiene verschiebbar ist, gewährleistet so die drehbare Lagerung des Lüftungsteils. Alternativ wäre auch möglich, die Schiene an dem Lüftungsteil zu befestigen.

Der Gleiter kann z.B. mittels einer Rastverbindung mit dem Lüftungsteil verbunden sein. So ist eine einfache, schnelle Montage des Gleiters und somit der gesamten Baugruppe am Lüftungsteil möglich.

Die Schiene weist bevorzugt an jedem Ende einen Anschlag für den Gleiter auf. Der Gleiter weist dabei einen oder mehrere Vorsprünge auf, so daß die Drehbewegung des Lüftungsteils begrenzt ist, da bei einem Auftreffen des Anschlags an dem bzw. den Vorsprüngen die Bewegung des Gleiters in der Schiene stoppt.

Gemäß einer Ausführungsform ist die Schiene schwalbenschwanzartig oder T-nutförmig ausgebildet. Zusammen mit einem komplementär ausgebildeten Gleiter ist eine spielfreie Führung zwischen dem Lüftungsteil und dem Gehäuse möglich.

Vorzugsweise ist die Baugruppe im In-Mould-Assembly-Verfahren hergestellt. Bei diesem Verfahren wird kurz zusammengefaßt ein erstes Spritzgußteil in einer ersten Form gefertigt. Dann wird das erste Spritzgußteil aus der ersten Form entnommen und in eine zweite Form eingebracht. Dabei härtet das erste Spritzgußteil so weit aus und gewinnt so weit an Festigkeit, daß ein Spritzgußmaterial in die zweite Form eingespritzt werden kann, das beispielsweise eine Öffnung des ersten Spritzgußteils ausfüllt und darin zu einem zweiten Spritzgußteil aushärtet. Das zweite Spritzgußteil ist dann zwar in dem ersten Spritzgußteil beweglich, jedoch unlösbar mit diesem verbunden. Dabei ergibt sich der wesentliche Vorteil, daß das zweite Spritzgußteil nicht am ersten montiert werden muß. So kann eine optimale Paßgenauigkeit erreicht werden.

Weitere Merkmale und Vorteil ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine perspektivische Ansicht eines erfindungsgemäßen Luftausströmers mit einem Gehäuse in einer ersten Stellung,
- Figur 2 eine perspektivische Ansicht des Luftausströmers von Figur 1 ohne Gehäuse in der ersten Stellung,
- Figur 3 eine perspektivische Ansicht einer Baugruppe des Luftausströmers,
- Figur 4 eine perspektivische Ansicht des erfindungsgemäßen Luftausströmers ohne Gehäuse in einer zweiten Stellung,
- Figur 5 eine perspektivische Ansicht des erfindungsgemäßen Luftausströmers ohne Gehäuse in einer dritten Stellung, und
- Figur 6 eine perspektivische Ansicht des Luftausströmers von Figur 5 mit Gehäuse in der dritten Stellung.

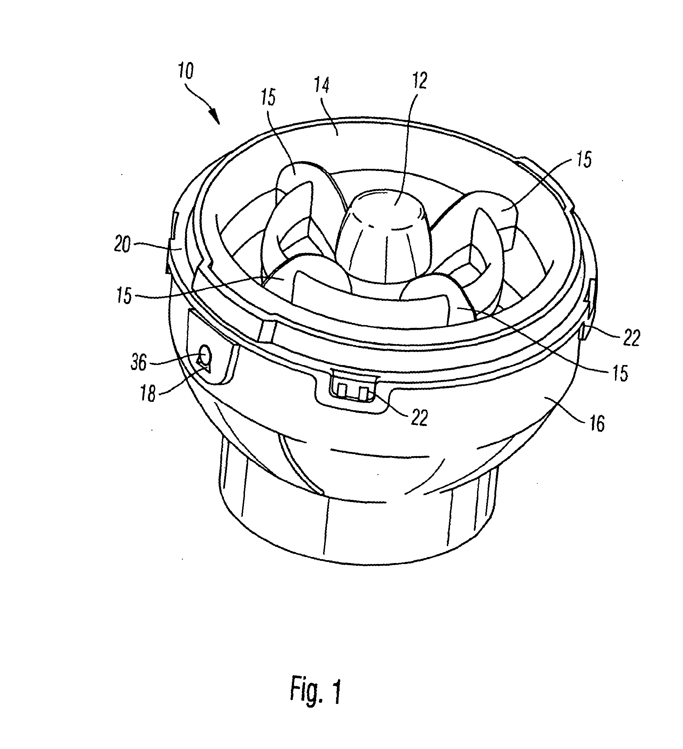

Figur 1 zeigt einen Luftausströmer 10 für eine Fahrzeugbelüftung, der dazu dient, die Richtung und das Volumen des Luftstroms zu regeln. Der hier gezeigte runde Luftausströmer 10 kann zum Verstellen der Lamellen und der Absperrklappe (nicht gezeigt) an einem mittleren Abschnitt 12 eines Lüftungsteils 14 bewegt werden. Die genaue Verbindung zwischen dem mittleren Abschnitt 12 des Lüftungsteils 14 und den Lamellen bzw. der Absperrklappe (nicht gezeigt) ist hier nicht gezeigt.

Am mittleren Abschnitt 12 des Lüftungsteils 14 sind vier Teile 15 angeordnet, die dem Luftausströmer ein propellerartiges Aussehen geben, um eine für den Fahrzeuginsassen ansprechende Optik zu gewährleisten. Das Anbringen der Teile 15 an dem Lüftungsteil 14 ist dabei hinlänglich bekannt und wird hier nicht näher erläutert.

Das Lüftungsteil 14 ist kalottenförmig ausgeführt und ist von einem Gehäuse 16 umgeben (Figur 1). In dem Bereich, in dem das Lüftungsteil 14 in dem Gehäuse 16 angeordnet ist, ist auch das Gehäuse 16 kalottenförmig ausgeführt. Im weiteren Verlauf ist das Gehäuse 16 rohrförmig ausgebildet und stellt die Verbindung zum Lufteintrittskanal her.

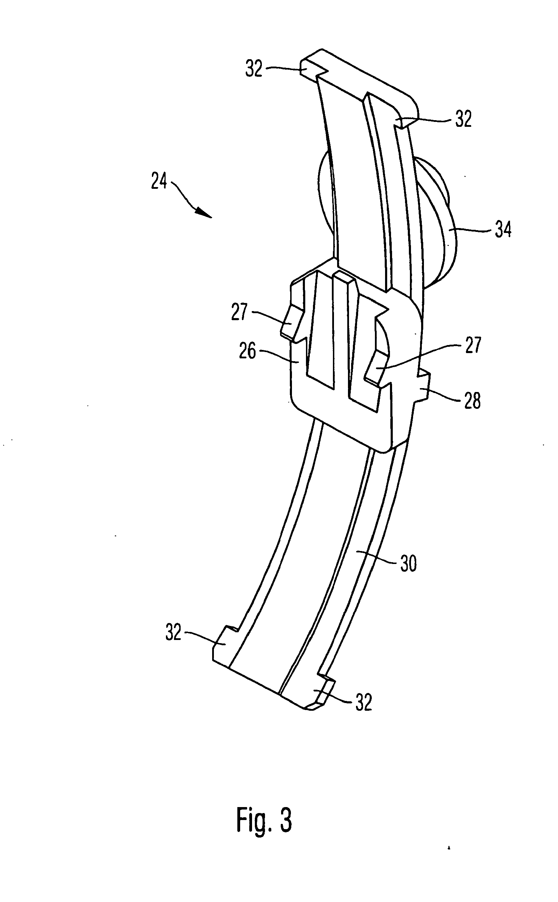

Die Lagerung des Lüftungsteils 14 am Gehäuse 16 erfolgt über eine Baugruppe 24 (siehe insbesondere Figur 3). Die Baugruppe 24 besteht aus einem Gleiter 26, der am Lüftungsteil 14 mittels einer Rastverbindung befestigt ist. Dabei weist der Gleiter 26 zwei Rastnasen 27 auf, die in das Lüftungsteil 14 eingreifen. Der Gleiter 26 weist an der entgegengesetzten Seite der Rastnasen 27 Vorsprünge 28 auf, deren Funktion im weiteren erklärt wird.

Ferner weist die Baugruppe 24 eine Schiene 30 auf, in der der Gleiter 26 verschiebbar ist. Die Schiene 30 weist an jedem Ende einen Anschlag 32 auf, wie im weiteren näher ausgeführt wird. Die Schiene 30 und der Gleiter 26 sind schwalbenschwanzförmig gezeigt, können jedoch auch T-nutförmig ausgeführt sein. Die Schiene 30 ist in zwei Richtungen gekrümmt ausgeführt, wobei sie dieselbe Krümmung wie das Lüftungsteil 14 und das Gehäuse 16 aufweist, um in einen Spalt zwischen dem Lüftungsteil 14 und dem Gehäuse 16 eingebaut zu werden.

Um den Spalt zwischen dem Gehäuse 16 und dem Lüftungsteil 14 zu bedekken, ist eine Abdeckung 20 angeordnet. Die Abdeckung 20 ist im Fahrzeuginnenraum für den Fahrzeuginsassen sichtbar und gewährleistet eine optisch ansprechende Ausbildung des Luftausströmers 10. Die Abdeckung 20 ist ringförmig ausgeführt und rastet mittels Rastabschnitten 22 am Gehäuse 16 ein (siehe insbesondere Figur 1).

Die Baugruppe 24 weist ein Schwenklager 34 auf, das wiederum einen Lagerzapfen 36 aufweist, der an der Schiene 30 angebracht ist. Der Lagerzapfen 36 stellt eine Verbindung zwischen dem Lüftungsteil 14 und dem Gehäuse 16 her und ist in einer Aussparung 18 im Gehäuse 16 drehbar gelagert. Das Gehäuse 16 ist in den Bereichen der beiden Aussparungen 18, die sich auf den gegenüberliegenden Seiten des Gehäuses 16 befinden, verstärkt ausgebildet, um eine erforderliche Festigkeit an der Lagerstelle zu gewährleisten.

Die Baugruppe 24 mit der Schiene 30, dem Gleiter 26 und dem Schwenklager 34 ist im In-Mould-Assembly-Verfahren hergestellt. Dieses Kunststoffspritzgußverfahren ermöglicht eine optimale Paßgenauigkeit und eine spielfreie Dreh- und Schwenkbewegung des Lüftungsteils 14 im Gehäuse 16.

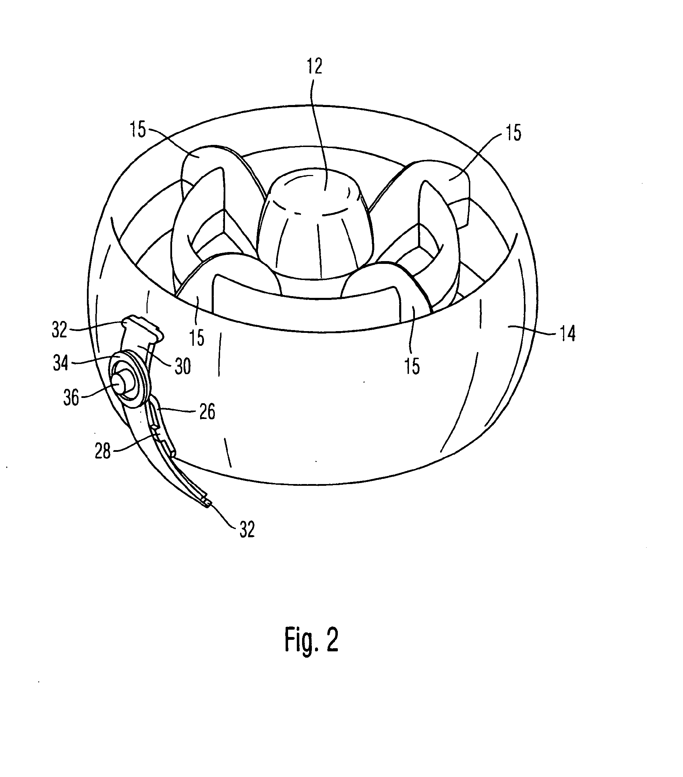

Die unterschiedlichen Dreh- und Schwenkbewegungen des Luftausströmers 10 sind in den Figuren gezeigt. So zeigen die Figuren 1 und 2 das Lüftungsteil 14 in einer unverschwenkten und unverdrehten Stellung.

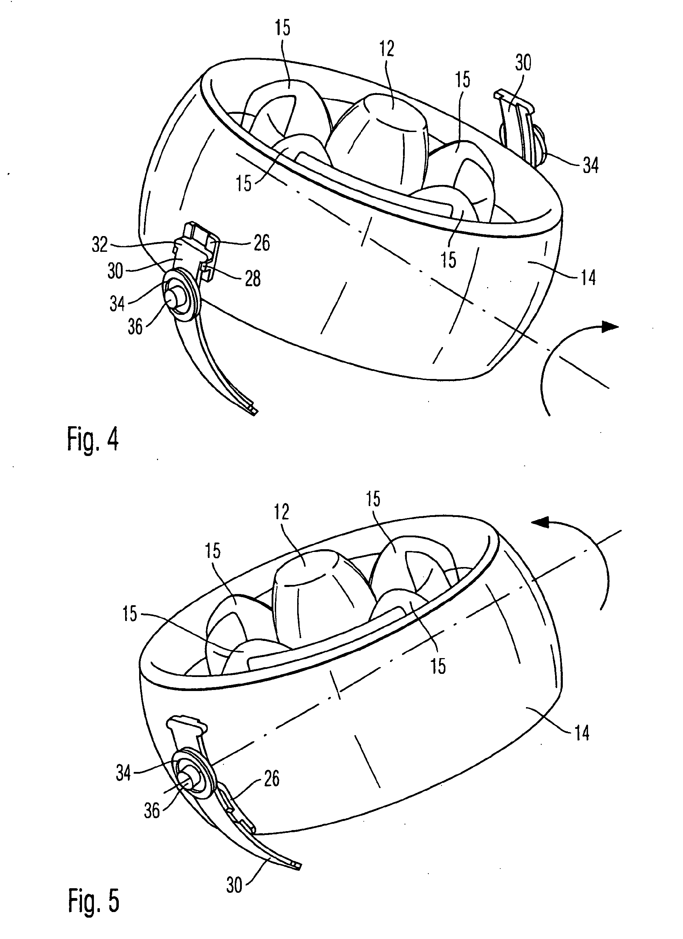

In Figur 4 ist das Lüftungsteil 14 maximal verdreht gezeigt. In dieser Stellung liegt der Anschlag 32 der Schiene 30 an den Vorsprüngen 28 des Gleiters 26 an. Der Anschlag 32 der Schiene 30 und die Vorsprünge 28 des Gleiters 26 begrenzen dabei die Bewegung des Gleiters 26 in der Schiene 30. Die hintere Schiene 30, die nur teilweise sichtbar ist, da sie von dem Lüftungsteil 14 verdeckt ist, liegt in dieser Stellung ebenfalls mit dem Anschlag 32 an den Vorsprüngen 28 des Gleiters 26 an.

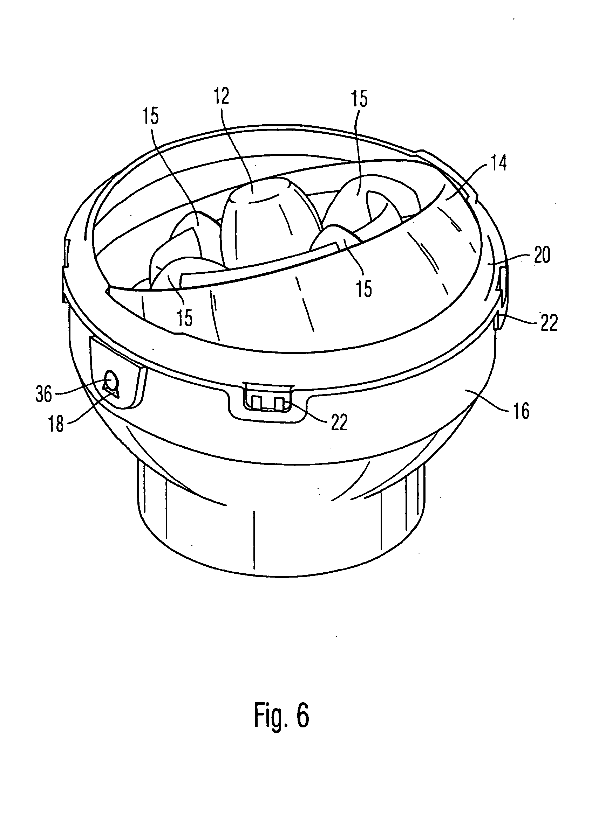

Figuren 5 und 6 zeigen das Lüftungsteil 14 in einer dritten Stellung. Der Gleiter 26 befindet sich hier, wie in den Figuren 1 und 2, in einer unverdrehten Stellung, während das Lüftungsteil 14 um das Schwenklager 34 verschwenkt ist, wie es an dem Pfeil und in Figur 6 erkenntlich ist.

In Figur 6 wird zudem ersichtlich, daß die Schwenkbewegung des Lüftungsteils 14 durch die Aussparung 18 im Gehäuse 16 beschränkt ist. Das Lüftungsteil 14 ist hier in der maximal verschwenkten Stellung gezeigt. In dieser Stellung steht das Schwenklager 34 am Rand der Aussparung 18 des Gehäuses 16 an und kann nicht weiter bewegt werden.

Die Baugruppe 24 ermöglicht so eine dreh- und schwenkbare Lagerung des Lüftungsteils 14 im Gehäuse 16. Da die Baugruppe 24 aus wenigen Bauteilen besteht, ist sowohl eine Platzersparnis als auch eine kostengünstige Ausführungsform des Luftausströmers 10 gewährleistet. Die In-Mould-Assembly-Baugruppe 24 ermöglicht dabei eine spielfreie Lagerung und somit eine optimale Paßgenauigkeit des Lüftungsteils 14 im Gehäuse 16.

## Patentansprüche

1. Luftausströmer, insbesondere für ein Fahrzeug, mit einem Gehäuse (16), einem Lüftungsteil (14) und einer Baugruppe (24), die eine Verbindung zwischen dem Gehäuse (16) und dem Lüftungsteil (14) herstellt und eine dreh- und schwenkbare Lagerung des Lüftungsteils (14) im Gehäuse (16) ermöglicht, wobei die Baugruppe (24) eine Schiene (30) aufweist, einen Gleiter (26), der auf der Schiene (30) verschiebbar ist, und ein Schwenklager (34), **dadurch gekennzeichnet, dass** die Schiene (30) in zwei Richtungen gekrümmt ausgeführt ist.

2. Luftausströmer nach Anspruch 1, **dadurch gekennzeichnet, dass** der Gleiter (26) mit dem Lüftungsteil (14) verbunden ist.

3. Luftausströmer nach Anspruch 2, **dadurch gekennzeichnet, dass** der Gleiter (26) mittels einer Rastverbindung mit dem Lüftungsteil (14) verbunden ist.

4. Luftausströmer nach einem der vorhergehenden Ansprüche, **dadurch gekennzeichnet, dass** die Schiene (30) an jedem Ende einen Anschlag (32) für den Gleiter (26) aufweist.

5. Luftausströmer nach einem der vorhergehenden Ansprüche, **dadurch gekennzeichnet, dass** das Schwenklager (34) einen Lagerzapfen (36) aufweist.

6. Luftausströmer nach Anspruch 5, **dadurch gekennzeichnet, dass** der Lagerzapfen (36) an der Schiene (30) angebracht ist.

7. Luftausströmer nach einem der vorhergehenden Ansprüche, **dadurch gekennzeichnet, dass** die Schiene (30) schwalbenschwanzartig oder T-nutförmig ausgebildet ist.

8. Luftausströmer nach einem der vorhergehenden Ansprüche, **dadurch gekennzeichnet, dass** die Baugruppe (24) im In-Mould-Assembly-Verfahren hergestellt ist.

## Claims

1. An air vent, in particular for a vehicle, comprising a housing (16), a ventilation part (14), and an assembly (24) which provides a connection between the housing (16) and the ventilation part (14) and permits a rotatable and pivotal mounting of the ventilation part (14) in the housing (16), the assembly (24) including a rail (30), a slider (26) that is displaceable on the rail (30), and a pivot bearing (34), **characterized in that** the rail (30) is configured to be curved in two directions.

2. The air vent according to claim 1, **characterized in that** the slider (26) is connected to the ventilation part (14).

3. The air vent according to claim 2, **characterized in that** the slider (26) is connected to the ventilation part (14) by means of a latching connection.

4. The air vent according to any of the preceding claims, **characterized in that** at each end, the rail (30) includes a stop (32) for the slider (26).

5. The air vent according to any of the preceding claims, **characterized in that** the pivot bearing (34) includes a bearing pin (36).

6. The air vent according to claim 5, **characterized in that** the bearing pin (36) is attached to the rail (30).

7. The air vent according to any of the preceding claims, **characterized in that** the rail (30) is configured to be dovetailed or in the shape of a T-slot.

8. The air vent according to any of the preceding claims, **characterized in that** the assembly (24) is produced in the in-mould assembly method.

## Revendications

1. Diffuseur d'air, en particulier pour véhicule, comportant un boîtier (16), une pièce d'aération (14) et un ensemble (24) établissant une liaison entre le boîtier (16) et la pièce d'aération (14) et permettant un montage à rotation ou à pivotement de la pièce d'aération (14) dans le boîtier (16), l'ensemble (24) présentant un rail (30), un coulisseau (26) déplaçable sur le rail (30), et un palier de pivotement (34), **caractérisé en ce que** le rail (30) est réalisé de manière à être courbé dans deux directions.

2. Diffuseur d'air selon la revendication 1, **caractérisé en ce que** le coulisseau (26) est relié à la pièce d'aération (14).

3. Diffuseur d'air selon la revendication 2, **caractérisé en ce que** le coulisseau (26) est relié à la pièce d'aération (14) au moyen d'une liaison par enclenchement.

4. Diffuseur d'air selon l'une des revendications précédentes, **caractérisé en ce que** le rail (30) présente à chaque extrémité une butée (32) pour le coulisseau (26).

5. Diffuseur d'air selon l'une des revendications précédentes, **caractérisé en ce que** le palier de pivotement (34) présente un tourillon (36).

6. Diffuseur d'air selon la revendication 5, **caractérisé en ce que** le tourillon (36) est monté sur le rail (30).

7. Diffuseur d'air selon l'une des revendications précédentes, **caractérisé en ce que** le rail (30) est réalisé en queue d'aronde ou sous forme de rainure en T.

8. Diffuseur d'air selon l'une des revendications précédentes, **caractérisé en ce que** l'ensemble (24) est fabriqué selon le procédé In Mould Assembly.
